# EUROPÄISCHE PATENTANMELDUNG

(11) **EP 2 570 744 A1**
(43) Veröffentlichungstag der Anmeldung: **20.03.2013**
(21) Anmeldenummer: 11181496.8
(22) Anmeldetag: 15.09.2011
(51) Int. Cl.: F24F 11/00, G05B 19/418

(54) **Verfahren zur Änderung der Bestandteile an Komponenten eines Systems einer klima- und raumlufttechnischen Anlage**

(71) Anmelder: TROX GmbH, 47506 Neukirchen-Vluyn (DE)
(72) Erfinder: Lange, Stefan, 47506 Neukirchen-Vluyn (DE); Olders, Matthias, 47506 Neukirchen-Vluyn (DE)
(74) Vertreter: DR. STARK & PARTNER

(57) **Zusammenfassung**

Die Erfindung betrifft ein Verfahren zur Änderung der Bestandteile an Komponenten eines Systems einer klima- und raumlufttechnischen Anlage a) durch Ergänzen einer Komponente oder b) durch Entfernen einer Komponente oder c) durch Austausch einer Komponente durch eine baugleiche Komponente, wobei das System zumindest zwei lüftungstechnische Komponenten umfasst und wobei jede Komponente zumindest eine Speichereinheit und insbesondere auch eine Rechnereinheit aufweist.

## Beschreibung

Die Erfindung betrifft Verfahren zur Änderung der Bestandteile an Komponenten eines Systems einer klima- und raumlufttechnischen Anlage a) durch Ergänzen einer Komponente oder b) durch Entfernen einer Komponente oder c) durch Austausch einer Komponente durch eine baugleiche Komponente, wobei das System zumindest zwei lüftungstechnische Komponenten umfasst und wobei jede Komponente zumindest eine Speichereinheit und insbesondere auch eine Rechnereinheit aufweist.

Um die lufttechnische Funktion eines Raums zu realisieren, werden verschiedene lufttechnische Komponenten zu einem System zusammengefasst. Die dazu erforderliche Kommunikation zwischen den einzelnen Komponenten wird entweder über eine Analogverdrahtung oder über Netzwerke realisiert. Für den einwandfreien Betrieb des Systems müssen die Kommunikationswege definiert werden.

Beim Austausch einzelner Komponenten müssen diese entsprechend den Projektanforderungen mit den gleichen Parametern, d.h. Konfigurationsdaten, ausgestattet werden, wie die ersetzte Komponente. Ein Zugriff auf die notwendigen Konfigurationsdaten in den ausgetauschten Komponenten ist insbesondere, wenn sie defekt sind, nicht mehr möglich. Eine eventuell bestehende Dokumentation ist nicht zwingend auf dem aktuellsten Stand. Bei Austausch einer Komponente ist daher der Einsatz eines zusätzlichen Tools erforderlich, um die benötigten Konfigurationsdaten in die ersetzte neue Komponente einzutragen.

Aufgabe der Erfindung ist es, die vorgenannten Nachteile zu vermeiden und ein System anzugeben, das eine einfache Ergänzung und/oder ein einfaches Entfernen und/oder Austausch einer Komponente in einem bestehenden System ermöglicht.

Diese Aufgabe wird bei Ergänzen einer neuen Komponente in das System dadurch gelöst, dass in jeder im System bereits integrierten Komponente zum einen die eigenen Konfigurationsdaten und zum anderen in Form von Backupdaten die Konfigurationsdaten zumindest einer anderen im System befindlichen Komponente hinterlegt sind, dass jeder Komponente eine diese Komponente eindeutige Identifizierung, beispielsweise eine Seriennummer oder eine Identifizierungsnummer, zugeordnet ist und
- dass bei Ergänzen einer neuen Komponente in das System in der neuen Komponente, insbesondere bereits vor der Installation oder durch systeminterne Kommunikation, ihre eigenen Konfigurationsdaten hinterlegt werden,
- dass dann automatisch die zu installierende neue Komponente eine Verbindung mit einer bereits in dem System installierten anderen Komponente anhand vorgegebener Parameter, beispielsweise mit der Komponente mit der kleinsten Seriennummer innerhalb des Systems, eingeht,
- dass dann automatisch die auf der Speichereinheit dieser Komponente hinterlegten Backupdaten einer dritten Komponente auf die Speichereinheit der zu installierenden neuen Komponente übertragen und dort als Backupdaten der dritten Komponente gespeichert werden,
- dass dann automatisch die Speichereinheit der betreffenden bereits in dem System installierten anderen Komponente freigemacht oder zur Neubeschreibung freigegeben wird und
- dass dann automatisch die auf der Speichereinheit der zu installierenden neuen Komponente hinterlegten Konfigurationsdaten unter Konvertierung zu Backupdaten auf die Speichereinheit der betreffenden bereits in dem System installierten anderen Komponente übertragen und dort als Backupdaten der zu installierenden neuen Komponente gespeichert werden.

Nach Durchführung des erfindungsgemäßen Verfahrens sind auf der Speichereinheit der nunmehr fertig installierten neuen Komponente zum einen ihre eigenen Konfigurationsdaten und zum anderen die Backupdaten einer anderen Komponente hinterlegt. Ferner sind auf der Speichereinheit jeder Komponente innerhalb des Systems auch die Backupdaten zumindest einer anderen Komponente des Systems gespeichert. Nach Durchführung des erfindungsgemäßen Verfahrens hat damit jede Komponente nach der Erweiterung des Systems weiterhin ihre eigenen Konfigurationsdaten sowie die Backupdaten in Form einer Sicherungskopie zumindest einer anderen Komponente.

Beim Entfernen einer zu entfernenden Komponente aus dem System wird diese Aufgabe dadurch gelöst, dass in jeder im System bereits integrierten Komponente zum einen die eigenen Konfigurationsdaten und zum anderen in Form von Backupdaten die Konfigurationsdaten zumindest einer anderen im System befindlichen Komponente hinterlegt sind, dass jeder Komponente eine diese Komponente eindeutige Identifizierung, beispielsweise eine Seriennummer oder eine Identifizierungsnummer, zugeordnet ist und
- dass beim Entfernen nach dem Entfernen der zu entfernenden Komponente manuell ein Prozess dahingehend aktiviert wird, dass jede Komponente überprüft, ob in dem System noch diejenige Komponente, deren Konfigurationsdaten den in der überprüfenden Komponente hinterlegten Backupdaten entspricht, vorhanden ist,
- dass dann die Speichereinheit der Komponente, auf der die Backupdaten der entfernten Komponente gespeichert sind, freigemacht oder zur Neubeschreibung freigegeben wird,
- dass dann die auf der Speichereinheit einer anderen Komponente hinterlegten Backupdaten einer dritten Komponente auf die Speichereinheit der Komponente ohne Backupdaten übertragen und dort als Backupdaten der dritten Komponente gespeichert werden,
- dass dann die Speichereinheit der anderen Komponente freigemacht oder zur Neubeschreibung freigegeben wird und
- dass dann die Konfigurationsdaten derjenigen Komponente, die noch nicht als Backupdaten auf einer der anderen Komponenten des Systems hinterlegt sind, weil sie auf der entfernten Komponente hinterlegt waren, unter Konvertierung zu Backupdaten auf die Speichereinheit der anderen Komponente übertragen und dort als Backupdaten dieser Komponente gespeichert werden.

Die Übertragung der auf der Speichereinheit einer anderen Komponente hinterlegten Backupdaten einer dritten Komponente auf die Speichereinheit der Komponente ohne Backupdaten und die anschließende Speicherung dort als Backupdaten der dritten Komponente kann nach vorgegebenen Parametern, wie beispielsweise der Auswahl der Komponente mit der kleinsten Seriennummer innerhalb des Systems, erfolgen.

Beim Austausch einer Komponente durch eine identische Komponente in das System wird diese Aufgabe dadurch gelöst, dass in jeder im System bereits integrierten Komponente zum einen die eigenen Konfigurationsdaten und zum anderen in Form von Backupdaten die Konfigurationsdaten zumindest einer anderen im System befindlichen Komponente hinterlegt sind, dass jeder Komponente eine diese Komponente eindeutige Identifizierung, beispielsweise eine Seriennummer oder eine Identifizierungsnummer, zugeordnet ist und
- dass beim Austausch nach Entfernen der zu entfernenden Komponente eine baugleiche Komponente ergänzt wird,
- dass dann automatisch von der Speichereinheit der Komponente, auf der die Backupdaten der entfernten Komponente gespeichert waren, die Backupdaten der entfernten Komponente unter Konvertierung zu Konfigurationsdaten auf die zu installierende neue identische Komponente übertragen und dort als Konfigurationsdaten dieser neuen Komponente gespeichert werden
- und dass dann automatisch die Konfigurationsdaten, die noch nicht als Backupdaten auf einer der anderen Komponenten des Systems hinterlegt sind, weil sie auf der entfernten Komponente hinterlegt waren, unter Konvertierung zu Backupdaten auf die Speichereinheit der neuen Komponente übertragen und dort als Backupdaten dieser anderen Komponente gespeichert werden.

Unter einem Austausch wird ein Entfernen und ein anschlie-βendes Ergänzen einer identischen Komponente bei identischem Satz an Konfigurationsdaten verstanden.

Unter Konvertierung wird bei allen drei Vorgängen zum einen ein Umwandeln von Daten, beispielsweise in ein anderes Format oder durch Bereinigen der Daten verstanden. Zum anderen ist auch ein Speichern der Daten in unveränderter Form in einem anderen Speicherbereich einer Speichereinheit oder in einer anderen Speichereinheit denkbar.

Jeder Komponente kann eine Speichereinheit mit zumindest zwei Speicherbereichen oder auch mehrere Speichereinheiten zugeordnet sein. Die Identifizierung ist auslesbar und wird beispielsweise bei Auslieferung der Komponente vergeben und ist insbesondere vorzugsweise nicht änderbar.

Sowohl beim Ergänzen als auch beim Entfernen oder auch beim Austausch kann eine Verbindung zwischen zwei Komponenten darin bestehen, dass eine Komponente in Empfangsbereitschaft und eine andere Komponente in Sendebereitschaft geht. Es ist aber auch selbstverständlich möglich, dass eine Verbindung mit einer beabsichtigten Kommunikation hergestellt wird.

Die einzelnen Komponenten können drahtlos, beispielsweise funkbasiert, untereinander verbunden sein. Es ist aber auch eine Verbindung beispielsweise über eine Busleitung möglich.

Bei den erfindungsgemäßen Verfahren kann durch eine Speicherung und eine Spiegelung der Parametersätze, d.h. der Konfigurationsdaten einerseits und der Backupdaten andererseits, innerhalb des Systems beispielsweise eine ersetzte Komponente ohne projektspezifische Daten eingesetzt werden und ohne Verwendung eines zusätzlichen Tools auf den letzten Konfigurationsstand der ausgetauschten Komponente aktualisiert werden. Durch Aktivierung einer Auslesefunktion werden die Konfigurationsdaten und/oder Backupdaten in die Komponente eingespielt und auf der entsprechenden Speichereinheit hinterlegt. Dies ermöglicht den Austausch von Komponenten durch ein Servicepersonal ohne Detailkenntnisse.

Es bietet sich an, wenn anschließend an eine Installation eine erneute Datensicherung im System erfolgt, damit auch andere Daten oder auch vielleicht die Backupdaten anderer weiterer Komponenten in der Speichereinheit beispielsweise einer neu installierten Komponente hinterlegt sind.

Bei zumindest einer Komponente kann die dieser Komponente zugeordnete eindeutige Identifizierung in den Konfigurationsdaten der betreffenden Komponente enthalten sein. Die Identifizierung ist auch in der Speichereinheit zumindest dieser betreffenden Komponente hinterlegt. Es ist aber auch durchaus möglich, das der(die) Parameter separat von den Konfigurationsdaten und von den Backupdaten hinterlegt ist.

Vorzugsweise kann jede im System befindliche und mit zumindest einer anderen Komponente verbundene Komponente in, insbesondere in regelmäßigen, Abständen überprüfen, ob auf zumindest einer anderen, in dem System befindlichen und auch verbundenen Komponente ihre Konfigurationsdaten in Form von Backupdaten hinterlegt sind. Eine solche Überprüfung kann nur mit der betreffenden Komponente erfolgen, in der die Konfigurationsdaten in Form von Backupdaten bei der Installation hinterlegt worden sind. Es ist aber auch durchaus möglich, dass alle Komponenten, gegebenenfalls auch nach einer einstellbaren Reihenfolge, überprüft werden.

Vorzugsweise kann jede im System befindliche und mit zumindest einer anderen Komponente verbundene Komponente in, insbesondere in regelmäßigen, Abständen überprüfen, ob innerhalb des Systems eine Komponente besteht, deren Konfigurationsdaten den auf ihrer Speichereinheit hinterlegten Backupdaten entsprechen. Eine solche Überprüfung kann nur mit der betreffenden Komponente erfolgen, in der die Konfigurationsdaten in Form von Backupdaten bei der Installation hinterlegt worden sind. Es ist aber auch durchaus möglich, dass alle Komponenten, gegebenenfalls auch nach einer einstellbaren Reihenfolge, überprüft werden.

Sofern mehr als eine Komponente ausgetauscht werden soll, stehen folgende Möglichkeiten zur Erkennung, welche Backupdaten in die betreffende Komponente einzuspielen sind, zur Verfügung:
- Sofern Komponenten unterschiedlicher Funktionen im System integriert sind, kann die betreffende Grundfunktion dieser Komponenten über eine Hardware-Konfiguration voreingestellt sein. Bei gleicher Hardware bietet sich beispielsweise ein Schalter auf einer Platine an. Durch Betätigung des Schalters ist sichergestellt, dass nur die zu dieser betreffenden Komponente passenden Konfigurationsdaten und/oder eine eventuelle Software übertragen wird(werden).
- Bei unterschiedlicher Hardware, d.h. bei Komponenten unterschiedlicher Funktion und/oder auch unterschiedlicher Konfigurationsdaten, bietet sich eine Hardware-Erkennung über einen Parameter, wie z.B. eine Identifizierungsnummer, eine Seriennummer oder dergleichen an, um verschiedene Komponenten eindeutig zu erkennen.
- Auch ist eine manuelle Vergabe eines Parameters, wie einer Identifizierungsnummer oder einer Adresskodierung möglich. Dadurch ist eine Bestimmung und Identifizierung der betreffenden Komponente sichergestellt eine entsprechende Datenübertragung möglich. Hierbei ist es jedoch erforderlich, dass jede Komponente im System eine eindeutige Adresskodierung besitzt.

Selbstverständlich sind auch Kombinationen der drei zuvor beschriebenen Maßnahmen denkbar. So kann beispielsweise die erste Maßnahme oder zweite Maßnahme um die dritte Maßnahme ergänzt werden.

Im Folgenden werden in den Zeichnungen dargestellte Ausführungsbeispiele der Erfindung erläutert. Es zeigen:
- Fig. 1: ein erfindungsgemäßes System,
- Fig. 2: ein Verfahrensschema beim Ergänzen einer Komponente zu einem bestehenden System,
- Fig. 3: ein Verfahrensschema beim Entfernen einer Komponente aus einem bestehenden System und
- Fig. 4: ein Verfahrensschema beim Austausch einer Komponente aus einem bestehenden System durch eine baugleiche Komponente.

In allen Figuren werden für gleiche bzw. gleichartige Bauteile übereinstimmende Bezugszeichen verwendet.

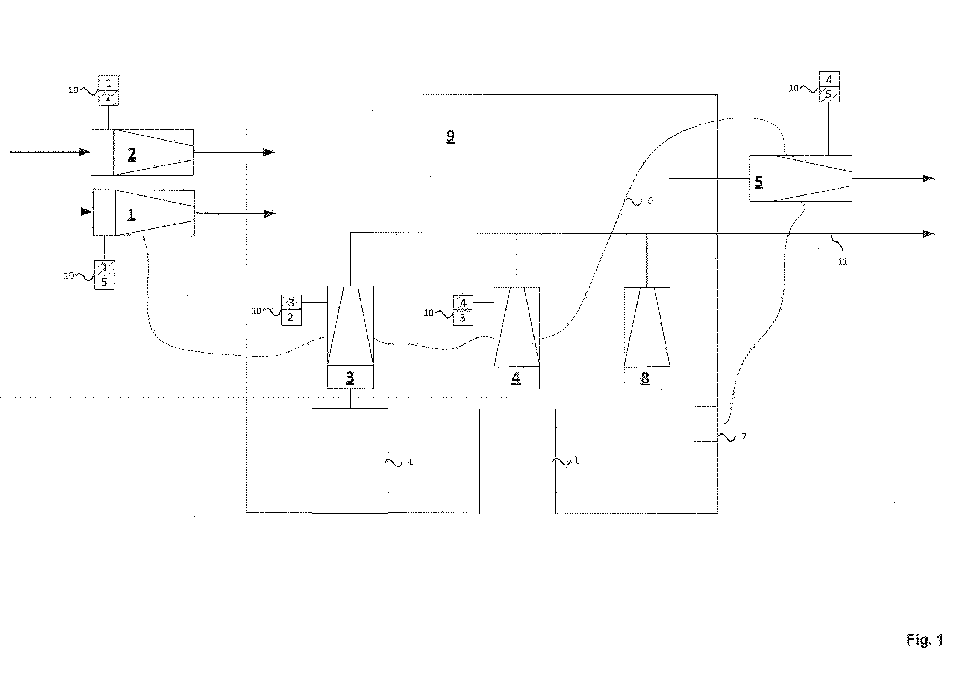

Fig. 1 zeigt ein System, das in dem dargestellten Ausführungsbeispiel aus fünf über eine Busleitung 6 untereinander verbundenen lüftungstechnischen Komponenten 1 bis 5 besteht. Zusätzlich ist noch eine weitere als Raumbediengerät 7 ausgebildete Komponente vorgesehen, die ebenfalls über die Busleitung 6 mit den anderen fünf Komponenten verbunden ist.

Ferner ist ein Konstantvolumenstromregler 8 vorgesehen, der aber nicht an der Busleitung 6 angeschlossen ist. Das System dient zur Be- und Entlüftung eines Raumes 9, in dem insgesamt zwei Laborabzüge L angeordnet sind.

Für die Zuluftversorgung sind insgesamt zwei Zuluftvolumenstromregler 1, 2 vorgesehen, die je eine Speichereinheit 10 aufweisen. Sie können auch weitere Komponenten, wie eine Messeinrichtung, eine Empfangs- und/oder eine Sendeeinrichtung für eine drahtlose Verbindung aufweisen.

Jedem Laborabzug L ist ein Abluftvolumenstromregler 3, 4 mit je einer Speichereinheit 10 zugeordnet. Auch die Abluftvolumenstromregler 3, 4 können weitere Komponenten, wie eine Messeinrichtung, eine Empfangs- und/oder eine Sendeeinrichtung für eine drahtlose Verbindung aufweisen.

Zusätzlich ist eine Komponente als Raumabluftregler 5 ausgebildet. Auch dem Raumabluftregler 5 ist eine Speichereinheit 10 zugeordnet. Darüber hinaus kann der Raumabluftregler 5 auch weitere Komponenten, wie eine Messeinrichtung, eine Empfangs- und/oder ein Sendeeinrichtung für eine drahtlose Verbindung aufweisen.

In der Speichereinheit 10 jeder Komponente sind unter anderem zum einen die eigenen Konfigurationsdaten dieser Komponente und zum anderen die Backupdaten zumindest einer anderen im System befindlichen Komponente hinterlegt. Die Konfigurationsdaten sind zur besseren Visualisierung in Fig. 1 durch einen schraffierten Bereich dargestellt.

Darüber hinaus können in jeder Speichereinheit 10 selbstverständlich auch eine Vielzahl weiterer Daten gespeichert sein. So kann beispielsweise in der jeweiligen Speichereinheit 10 der Zuluftvolumenstromregler 1 und 2 Daten über den zu regelnden Anteil des betreffenden Zuluftvolumenstromreglers 1, 2 in den Raum 9 hinterlegt sein. Selbstverständlich kann auch beispielsweise die zu regelnde Gesamtzuluftmenge hinterlegt sein. In den Speichereinheiten 10 der Abluftvolumenstromregler 3, 4 kann beispielsweise die abzusaugende Gesamtabluftmenge hinterlegt sein.

Der Konstantvolumenstromregler 8 hat einen fest eingestellten Sollwert. Über einen Sammelkanal 11 wird die Abluft von den beiden Laborabzügen und dem Konstantvolumenstromregler 8 aus dem Raum 9 abgeführt.

In dem konkreten Ausführungsbeispiel enthält beispielsweise die Speichereinheit 10 des Zuluftvolumenstromreglers 1 zum einen seine eigenen Konfigurationsdaten und zum anderen die Backupdaten des Raumabluftreglers 5.

Fällt nun der Zuluftvolumenstromregler 2 aus und soll durch einen neuen baugleichen Zuluftvolumenstromregler ersetzt werden, erfolgt der Austausch nach dem erfindungsgemäßen Verfahren wie folgt:
Zunächst wird der Zuluftvolumenstromregler 2 durch einen baugleichen Zuluftvolumenstromregler ausgetauscht. Auf der Speichereinheit 10 des neuen, gerade eingebauten Zuluftvolumenstromreglers sind noch keine Konfigurations- oder Backupdaten hinterlegt.

Der Abluftvolumenstromregler 3 enthält die Backupdaten des zu installierenden neuen Zuluftvolumenstromreglers 2. Bei einer in regelmäßigen Abständen durchgeführten Überprüfung stellt der Abluftvolumenstromregler 3 fest, dass innerhalb des Systems keine Komponente mehr besteht, deren Konfigurationsdaten den auf der Speichereinheit 10 des Abluftvolumenstromreglers 3 hinterlegten Backupdaten entspricht. Daraufhin werden die Backupdaten unter Konvertierung zu Konfigurationsdaten von der Speichereinheit 10 des Abluftvolumenstromreglers 3 auf die Speichereinheit 10 des Zuluftvolumenstromreglers 2 übertragen.

Der Zuluftvolumenstromregler 1 stellt bei einer Überprüfung fest, dass seine eigenen Konfigurationsdaten noch nicht in dem System in Form von Backupdaten auf zumindest einer der anderen Komponenten hinterlegt sind. Der Zuluftvolumenstromregler 1 tritt mit dem Zuluftvolumenstromregler 2 in Verbindung und überträgt seine eigenen Konfigurationsdaten unter Konvertierung zu Backupdaten auf die Speichereinheit 10 des zu installierenden neuen Zuluftvolumenstromreglers 2. Damit ist der Einbau des Zuluftvolumenstromreglers 2 abgeschlossen, da auf der Speichereinheit 10 des ausgetauschten Zuluftvolumenstromreglers 2 nunmehr seine eigenen Konfigurationsdaten sowie die Backupdaten des Zuluftvolumenstromreglers 1 hinterlegt sind.

Soll nun eine neue Komponente zusätzlich zu den im System befindlichen Komponenten installiert werden, werden vor der Installation zunächst auf der Speichereinheit 10 dieser hinzuzufügenden Komponente seine eigenen Konfigurationsdaten hinterlegt.

Die zu installierende neue Komponente sucht nach der Installation über die Busleitung 6 innerhalb des Systems nach einer bereits in dem System installierten anderen Komponente unter Berücksichtigung eines vorgegebenen Suchparameters. Bei dem Suchparameter kann es sich beispielsweise um die Komponente mit der kleinsten Seriennummer handeln.

Unterstellt, dass vorliegend der Zuluftvolumenstromregler 1 die kleinste Seriennummer aufweist, werden nunmehr die auf der Speichereinheit 10 des Volumenstromreglers 1 hinterlegten Backupdaten des Raumabluftreglers 5 auf die Speichereinheit 10 der zu installierenden neuen Komponente übertragen.

Damit hat die Speichereinheit 10 der nunmehr fertig installierten neuen Komponente zum einen ihre eigenen Konfigurationsdaten und zum anderen die Backupdaten des Raumabluftreglers 5.

Anschließend überträgt die fertig installierte neue Komponente ihre eigenen Konfigurationsdaten unter Konvertierung zu Backupdaten auf die Speichereinheit 10 des Zuluftvolumenstromreglers 1. Damit sind von jeder Komponente innerhalb des Systems wieder die Backupdaten auf zumindest einer Komponente hinterlegt.

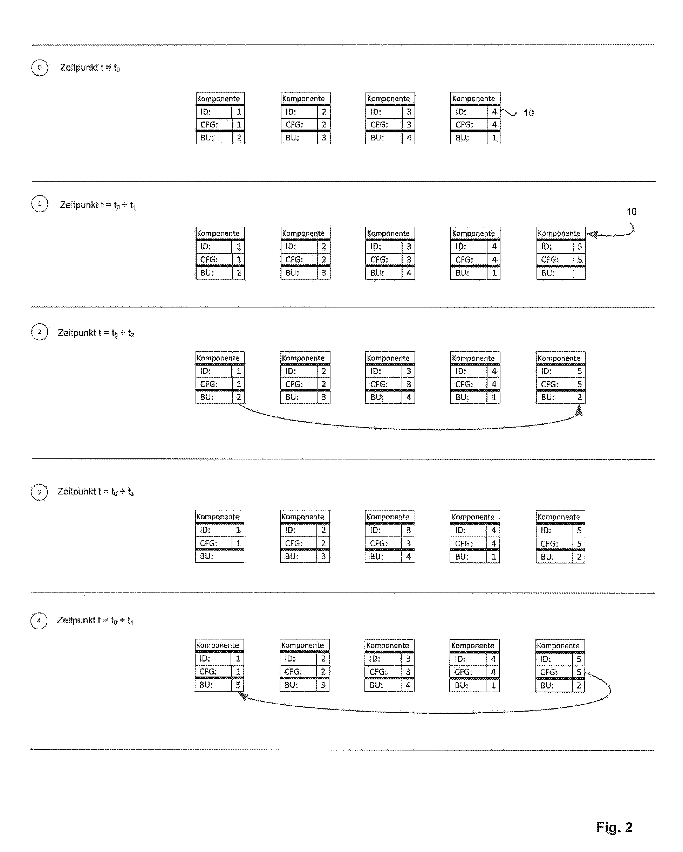

In Fig. 2 ist das Schema einer Ergänzung einer Komponente ID=5 zu den bereits im System verbundenen Komponenten ID=1 bis 4 nochmals im Detail dargestellt. Bei ID handelt es sich um die Identifizierungsnummer, bei CFG um die eigenen Konfigurationsdaten und bei BU um die Backupdaten.

Jede Komponente weist eine eindeutige Identifizierungsnummer auf. In jeder Speichereinheit 10 sind zum einen die eigenen Konfigurationsdaten sowie die Backupdaten einer anderen Komponente hinterlegt, so dass sichergestellt ist, dass die Konfigurationsdaten jeder Komponente in Form von Backupdaten in der Speichereinheit 10 einer anderen Komponente hinterlegt sind.

Dem System soll nun eine Komponente hinzugefügt werden. In dem dargestellten Ausführungsbeispiel hat die zu ergänzende Komponente die Identifizierungsnummer ID=5. In ihrer Speichereinheit 10 sind ihre eigenen Konfigurationsdaten hinterlegt.

Der automatische Reorganisationsprozess wird dadurch gestartet, dass in der hinzuzufügenden Komponente noch keine Backupdaten einer anderen Komponente abgelegt sind. Vorliegend sichert die neue Komponente ID=5 in ihrem Backupspeicher der Speichereinheit 10 die Backupdaten einer beliebig anderen Komponente des Systems, in dem vorliegenden Fall die Backupdaten der Komponente mit der kleinsten Identifizierungsnummer, d.h. ID=1. Hierbei handelt es sich um die Backupdaten der Komponente ID=2.

Damit sind die in Komponente ID=1 hinterlegten Backupdaten von Komponente ID=2 nicht mehr relevant, weil sie jetzt in der Speichereinheit 10 der hinzugefügten Komponente ID=5 abgelegt sind.

Die Speichereinheit 10 der Komponente ID=1 wird freigemacht oder zur Neubeschreibung freigegeben. Im nächsten Schritt werden nun in der Speichereinheit 10 der Komponente ID=1 die Konfigurationsdaten der Komponente ID=5 als Backupdaten hinterlegt.

Damit ist sichergestellt, dass jetzt jede Komponente die Backupdaten einer anderen Komponente beinhaltet. Die zur technischen Realisierung erforderliche Gesamtkommunikation einschließlich Quittierungen, Zustandsspeicherungen und Verriegelungen sind nicht dargestellt.

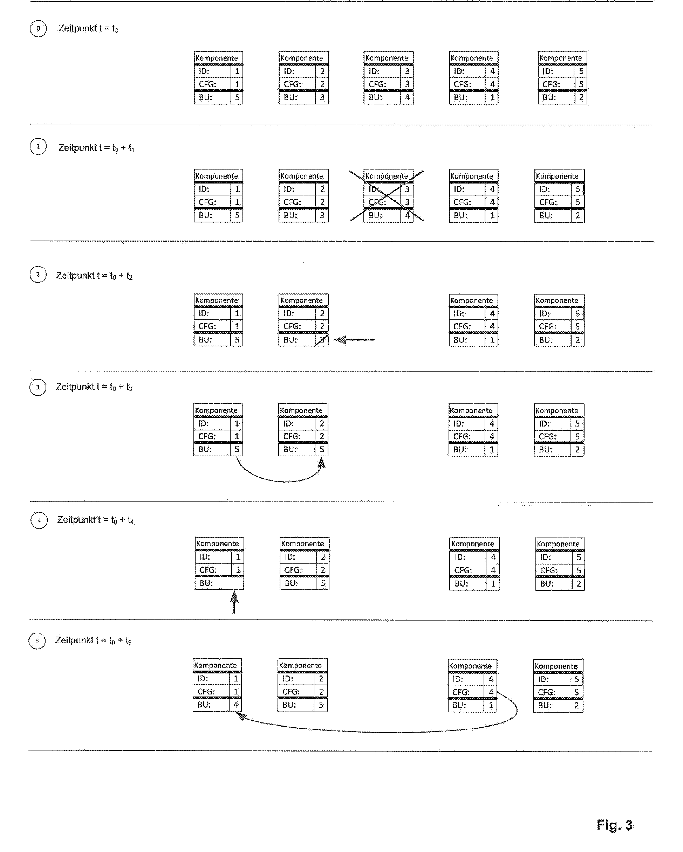

In Fig. 3 ist im Detail der Ablauf des Entfernens einer Komponente aus einem System mit den Komponenten ID=1 bis 5 dargestellt. Jede Komponente hat eine eindeutige Identifizierungsnummer. In jeder Speichereinheit sind wiederum die eigenen Konfigurationsdaten dieser Komponente sowie die Backupdaten einer anderen Komponente hinterlegt. Vorliegend soll die Komponente ID=3 entfernt werden.

Durch eine manuelle Auslösung an einer beliebigen Komponente des Systems wird der Reorganisationsprozess gestartet. Die Reihenfolge des Ablaufs ist beliebig. Wichtig ist, dass eine Komponente feststellt, dass innerhalb des Systems zu seinen Backupdaten keine Komponente mehr vorhanden ist. Die Komponente ID=2 stellt fest, dass sie Backupdaten der Komponente ID=3 hat, die aber nicht mehr im System vorhanden ist. Damit ist die Speichereinheit 10 der Komponente ID=2 für neue Backupdaten verfügbar.

Anschließend wird die Reorganisation automatisch fortgesetzt. Die Komponente ID=2 sichert in ihrer Speichereinheit die Backupdaten einer anderen beliebigen Komponente des Systems. Beispielsweise wird bei der Komponente mit der kleinsten ID-Nummer, d. h. vorliegend ID=1, nachgefragt.

Die auf der Speichereinheit 10 der Komponente ID=1 hinterlegten Backupdaten werden wiederum als Backupdaten auf die Speichereinheit 10 der Komponente ID=2 übertragen und hier als Backupdaten gespeichert.

Nach diesem Schritt sind damit in der Komponente ID=2 die bisher in der Speichereinheit der Komponente ID=1 hinterlegten Backupdaten der Komponente ID=5 hinterlegt.

Die in der Speichereinheit von Komponente ID=1 hinterlegten Backupdaten der Komponente ID=5 sind damit nicht mehr relevant, weil sie jetzt in der Speichereinheit der Komponente ID=2 abgelegt sind. In dem dargestellten Ausführungsbeispiel wird daraufhin die Speichereinheit der Komponente ID=1 zumindest in Bezug auf den Speicherbereich der Backupdaten freigemacht.

Der freigemachte Speicherbereich der Komponente ID=1 steht nun zur Sicherung der Konfigurationsdaten der Komponente ID=4 zur Verfügung, wobei die Konfigurationsdaten als Backupdaten konvertiert werden.

Damit ist wiederum sichergestellt, dass jede Komponente in seiner Speichereinheit 10 seine eigenen Konfigurationsdaten und die Backupdaten einer anderen Komponente hinterlegt hat.

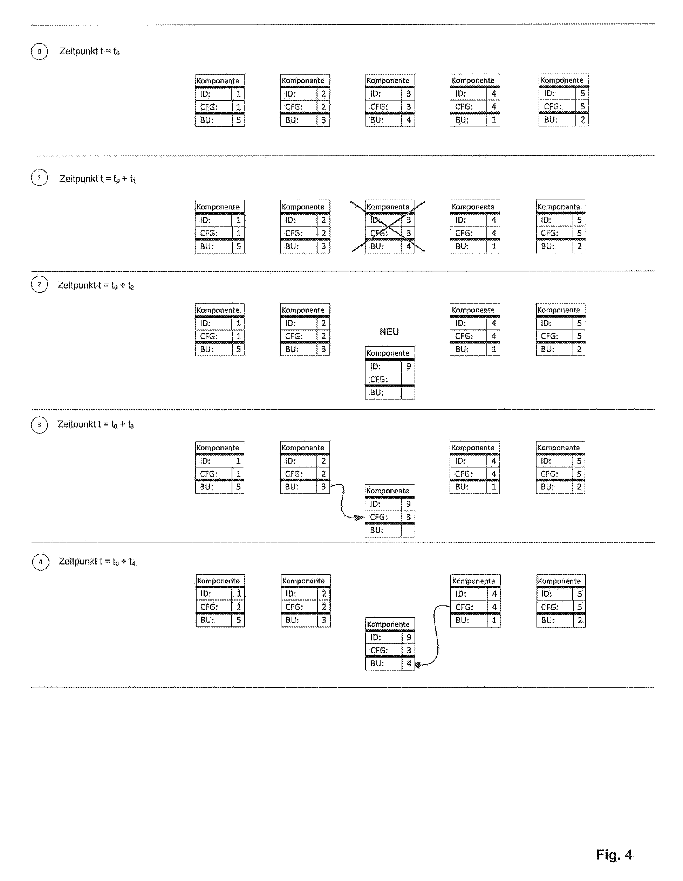

In Fig. 4 ist im Detail der Verfahrensablauf beim Austausch einer Komponente durch eine identische neue Komponente dargestellt.

In dem dargestellten Ausführungsbeispiel soll die Komponente ID=3 durch eine identische Komponente ersetzt werden, die vorliegend die Identifizierungsnummer ID=9 trägt.

Es soll damit eine unkonfigurierte Ersatzteilkomponente in das System eingefügt werden. Die Ersatzteilkomponente ist dadurch gekennzeichnet, dass sie einen leeren Konfigurationsdatenspeicher und einen leeren Backupspeicher besitzt. Diese neue Komponente ID=9 hat damit weder Konfigurationsdaten noch Backupdaten.

Im Rahmen der automatischen Reorganisation stellt das System fest, dass eine Ersatzteilkomponente ID=9 mit einer leeren Speichereinheit 10 existiert und dass weiterhin die im Backupspeicher der Speichereinheit 10 der Komponente ID=2 gesicherten Backupdaten zu keiner anderen Komponente im System mehr passen.

Daher werden die Backupdaten der Komponente ID=2 unter Konvertierung zu Konfigurationsdaten in die Speichereinheit der Komponente ID=9 übertragen und dort als Konfigurationsdaten gespeichert. Damit erhält die Komponente ID=9 die gleichen Konfigurationsdaten der zuvor entfernten Komponente ID=3.

Anschließend überprüfen alle Komponenten, ob ihre Konfigurationsdaten noch als Backupdaten in einer anderen Komponente des Systems gespeichert sind. Die Komponente ID=4 stellt fest, dass für sie keine Backupdaten existieren. Daraufhin werden die Konfigurationsdaten der Komponente ID=4 unter Konvertierung zu Backupdaten in die Speichereinheit 10 der Komponente ID=9 übertragen und hier als Backupdaten gespeichert. Damit ist sichergestellt, dass jede Komponente in der Speichereinheit 10 ihre eigenen Konfigurationsdaten sowie die Backupdaten einer anderen Komponente beinhaltet.

## Patentansprüche

1. Verfahren zur Änderung der Bestandteile an Komponenten eines Systems einer klima- und raumlufttechnischen Anlage a) durch Ergänzen einer Komponente oder b) durch Entfernen einer Komponente oder c) durch Austausch einer Komponente durch eine baugleiche Komponente, wobei das System zumindest zwei lüftungstechnische Komponenten umfasst und wobei jede Komponente zumindest eine Speichereinheit (10) und insbesondere auch eine Rechnereinheit aufweist, **dadurch gekennzeichnet, dass** in jeder im System bereits integrierten Komponente zum einen die eigenen Konfigurationsdaten und zum anderen in Form von Backupdaten die Konfigurationsdaten zumindest einer anderen im System befindlichen Komponente hinterlegt sind, dass jeder Komponente eine diese Komponente eindeutige Identifizierung, beispielsweise eine Seriennummer oder eine Identifizierungsnummer, zugeordnet ist
und a) dass bei Ergänzen einer neuen Komponente in das System
- in der neuen Komponente, insbesondere vor der Installation, ihre eigenen Konfigurationsdaten hinterlegt werden,
- dass die zu installierende neue Komponente eine Verbindung mit einer bereits in dem System installierten anderen Komponente anhand vorgegebener Parameter, beispielsweise mit der Komponente mit der kleinsten Seriennummer innerhalb des Systems, eingeht,
- dass die auf der Speichereinheit (10) dieser Komponente hinterlegten Backupdaten einer dritten Komponente auf die Speichereinheit (10) der zu installierenden neuen Komponente übertragen und dort als Backupdaten der dritten Komponente gespeichert werden,
- dass die Speichereinheit (10) der betreffenden bereits in dem System installierten anderen Komponente freigemacht oder zur Neubeschreibung freigegeben wird und
- dass die auf der Speichereinheit (10) der zu installierenden neuen Komponente hinterlegten Konfigurationsdaten unter Konvertierung zu Backupdaten auf die Speichereinheit (10) der betreffenden bereits in dem System installierten anderen Komponente übertragen und dort als Backupdaten der zu installierenden neuen Komponente gespeichert werden,
oder b) dass beim Entfernen
- nach dem Entfernen der zu entfernenden Komponente ein Prozess dahingehend aktiviert wird, dass jede Komponente überprüft, ob in dem System noch diejenige Komponente, deren Konfigurationsdaten den in der überprüfenden Komponente hinterlegten Backupdaten entspricht, vorhanden ist,
- dass die Speichereinheit (10) der Komponente, auf der die Backupdaten der entfernten Komponente gespeichert sind, freigemacht oder zur Neubeschreibung freigegeben wird,
- dass die auf der Speichereinheit (10) einer anderen Komponente hinterlegten Backupdaten einer dritten Komponente auf die Speichereinheit (10) der Komponente ohne Backupdaten übertragen und dort als Backupdaten der dritten Komponente gespeichert werden,
- dass die Speichereinheit (10) der anderen Komponente freigemacht oder zur Neubeschreibung freigegeben wird und
- dass die Konfigurationsdaten derjenigen Komponente, die noch nicht als Backupdaten auf einer der anderen Komponenten des Systems hinterlegt sind, unter Konvertierung zu Backupdaten auf die Speichereinheit (10) der anderen Komponente übertragen und dort als Backupdaten dieser Komponente gespeichert werden,
oder c) dass beim Austausch
- nach Entfernen der zu entfernenden Komponente eine baugleiche Komponente ergänzt wird,
- dass von der Speichereinheit (10) der Komponente, auf der die Backupdaten der entfernten Komponente gespeichert waren, die Backupdaten der entfernten Komponente unter Konvertierung zu Konfigurationsdaten auf die zu installierende neue Komponente übertragen und dort als Konfigurationsdaten dieser neuen Komponente gespeichert werden
- und dass die Konfigurationsdaten, die noch nicht als Backupdaten auf einer der anderen Komponenten des Systems hinterlegt sind, unter Konvertierung zu Backupdaten auf die Speichereinheit (10) der neuen Komponente übertragen und dort als Backupdaten dieser anderen Komponente gespeichert werden.

2. Verfahren nach dem vorhergehenden Anspruch, **dadurch gekennzeichnet, dass** bei zumindest einer Komponente die dieser Komponente zugeordnete eindeutige Identifizierung in den Konfigurationsdaten der betreffenden Komponente enthalten ist.

3. Verfahren nach einem der vorhergehenden Ansprüche, **dadurch gekennzeichnet, dass** jede im System befindliche und mit zumindest einer anderen Komponente verbundene Komponente in, insbesondere in regelmäßigen, Abständen überprüft, ob auf zumindest einer anderen, in dem System befindlichen und auch verbundenen Komponente ihre Konfigurationsdaten in Form von Backupdaten hinterlegt sind.

4. Verfahren nach einem der vorhergehenden Ansprüche, **dadurch gekennzeichnet, dass** jede im System befindliche und mit zumindest einer anderen Komponente verbundene Komponente in, insbesondere in regelmäßigen, Abständen überprüft, ob innerhalb des Systems eine Komponente besteht, deren Konfigurationsdaten den auf ihrer Speichereinheit (10) hinterlegten Backupdaten entsprechen.
